# EUROPÄISCHE PATENTSCHRIFT

(11) **EP 3 914 379 B1**
(45) Veröffentlichungstag und Bekanntmachung des Hinweises auf die Patenterteilung: **10.04.2024**
(21) Anmeldenummer: 20702589.1
(22) Anmeldetag: 23.01.2020
(51) Int. Cl.: B01F 23/232, B01F 23/233, B01F 25/314, B01F 25/433, B01F 27/272, B01F 35/75, B29B 7/40, B29B 7/74, B29B 7/76, B29B 7/58

(54) **MISCHVORRICHTUNG**
MIXING DEVICE
DISPOSITIF DE MÉLANGE

(30) Priorität: 23.01.2019 DE 102019200823
(43) Veröffentlichungstag der Anmeldung: 01.12.2021
(73) Patentinhaber: RAMPF Production Systems GmbH & Co. KG, 78658 Zimmern ob Rottweil (DE)
(72) Erfinder: RIEDLINGER, Manfred, 78713 Schramberg (DE)
(74) Vertreter: Weickmann & Weickmann PartmbB
(86) Internationale Anmeldenummer: PCT/EP2020/051587
(87) Internationale Veröffentlichungsnummer: WO 2020/152250

(56) Entgegenhaltungen:
- US-A- 2 263 892
- US-A1- 2017 216 873

## Beschreibung

Die vorliegende Erfindung betrifft eine Mischvorrichtung für das Mischen einer ersten Flüssigkeit und einer zweiten Flüssigkeit mit einem Gas gemäß dem Oberbegriff des Anspruchs 1.

Bislang bekannte Mischvorrichtungen vermischen Gas, wie beispielsweise Luft, mit einer Flüssigkeit oder einem Gemisch aus Flüssigkeiten unter Verwendung wenigstens eines Rührelements, wie beispielsweise Disolverscheiben. Dabei entstehen hohe Scherkräfte durch das Einwirken des Rührelements auf die Flüssigkeit oder das Gemisch von Flüssigkeiten, wodurch unter anderem die Tixotropie der Flüssigkeit oder des Gemischs von Flüssigkeiten verändert wird.

Insbesondere in dem Fall, in welchem Gas einer Flüssigkeit bereits vor einem Mischen mit einer anderen Flüssigkeit zugeführt wird, entsteht ein negativer Einfluss auf eine Dosiergenauigkeit aufgrund der Kompressibilität der mit Gas versetzten Flüssigkeit, so dass ein Mischungsverhältnis der beiden Flüssigkeiten miteinander nicht genau oder zumindest nur mit hohem Messaufwand des Beladungsgrades einstellbar ist.

Aus der US 2017/216873 A1, welche als nächstliegender Stand der Technik erachtet wird, ist eine Mischvorrichtung für das Mischen einer ersten Flüssigkeit und einer zweiten Flüssigkeit mit einem Gas in einer Mischkammer bekannt, wobei die Mischvorrichtung eine Dosiereinheit umfasst, über welche eine Strömungsrate des Gases reguliert werden kann. Ferner sei auf das Dokument US 2 263 892 A hingewiesen.

Der vorliegenden Erfindung liegt die Aufgabe zu Grunde, eine Mischvorrichtung bereitzustellen, welche in der Lage ist, Gas mit wenigstens einer Flüssigkeit auf eine vereinfachte Weise und ohne negative Beeinträchtigung der zu mischenden Komponenten zu mischen.

Diese Aufgabe wird durch eine Mischvorrichtung für das Mischen einer ersten Flüssigkeit und einer zweiten Flüssigkeit mit einem Gas nach Anspruch 1 gelöst.

Es sei bereits an dieser Stelle angemerkt, dass hier unter dem Begriff "Flüssigkeit" sowohl flüssiges als auch pastöses Material, das heißt ganz allgemein, jegliches Material, welches dazu geeignet ist, mit einem Gas vermischt zu werden, verstanden werden soll.

Aufgrund der Tatsache, dass in der erfindungsgemäßen Mischvorrichtung kein Gas dispergierendes Rührelement zum Einsatz kommt, können hohe Scherkräfte vermieden werden. Ferner kann dadurch erreicht werden, dass eine Temperatur der jeweiligen Flüssigkeit bzw. des Flüssigkeit-GasGemischs im Wesentlichen homogen ist.

Da an der erfindungsgemäßen Mischvorrichtung die Zuführung von Gas in der Mischkammer stattfindet, können die zu mischenden Flüssigkeiten bis zu ihrem Eintrag in die Mischkammer inkompressibel verbleiben. Somit kann ein Mischverhältnis der beiden Flüssigkeiten in der Mischkammer hochgenau eingestellt werden. Ferner ist es möglich, hoch tixotrope Materialien zu verwenden. Dieser positive Effekt bleibt auch dann erhalten, wenn das Gas nur einer der Flüssigkeiten vor deren Inkontakttreten mit der anderen Flüssigkeit, jedoch innerhalb der Mischkammer, zugeführt wird.

Im Gegensatz zu Dosierungsdüsen erlaubt die erfindungsgemäße Dosiereinheit mit einem länglichen Spalt ein feines und flächiges Einbringen von Gas in das Flüssigkeitsgemisch.

Die Gasmengenregelung erfolgt in der erfindungsgemäßen Mischvorrichtung durch den Differenzdruck zwischen einem in der Mischkammer herrschenden Druck und einem in der Gasquelle herrschenden Druck. Auf diese Weise kann die in die Mischkammer eingegebene Gasmenge direkt von dem Mischkammerdruck abhängen.

Die Dosiereinheit ist aus zwei miteinander gekoppelten plattenförmigen Elementen gebildet. Der längliche Spalt ergibt sich durch die Rauheit zweier aufeinanderliegender Flächen (im Sinne einer Membranfunktion).

Dabei liegen die plattenförmigen Elemente im Wesentlichen vollflächig aneinander an. Über eine Dimensionierung der plattenförmigen Elemente, insbesondere in einer Tiefenrichtung des länglichen Spalts, das heißt entlang einer Gasströmungsrichtung zwischen den plattenförmigen Elementen, können Parameter, wie beispielsweise Größe der Gasblasen und/oder Druck des Gaseintrags in die Mischkammer eingestellt werden.

Ferner können die aneinander anliegenden Flächen der plattenförmigen Elemente eine mittlere Oberflächenrauheit von höchstens Ra 0,1, insbesondere von höchstens Ra 0,05, vorteilhafterweise von Ra 0,03, aufweisen. Es ist offensichtlich, dass eine geringe mittlere Oberflächenrauheit einen geringen Luftdurchlass bedingt und eine große mittlere Oberflächenrauheit einen großen Luftdurchlass bedingt. Es sei an dieser Stelle erwähnt, dass die Rauheit Ra hier in µm angegeben ist.

In einer Weiterbildung der vorliegenden Erfindung können die plattenförmigen Elemente als Ringscheiben ausgebildet sein, wobei die Gasaustrittsseite der Dosiereinheit an der Ringinnenseite gebildet sein kann. Durch die Ausbildung des länglichen Spalts als Ring kann eine Abgabefläche der Dosiereinheit, über welche Gas in das Flüssigkeitsgemisch eingebracht wird, vergrößert werden. Bei einer Anordnung der Gasaustrittsseite der Dosiereinheit an der Ringinnenseite kann ein Flüssigkeitsgemisch beispielsweise vollständig durch den Ring geführt werden und so gleichmäßig über den Querschnitt des Flüssigkeitsgemischstroms mit Gas durchsetzt werden.

Die plattenförmigen Elemente können aus Metall, insbesondere Hartmetall, so wie gehärtetem Stahl, und/oder Aluminium, so wie harteloxiertem Aluminium, und/oder aus Keramik und/oder aus Polytetrafluorethylen hergestellt sein. Insbesondere Materialien, deren Oberflächenrauheit nach deren Herstellung, beispielsweise durch Schleifen, eingestellt werden kann, können zur Herstellung der plattenförmigen Elemente geeignet sein.

Ferner können die plattenförmigen Elemente aus einem porösen Material hergestellt sein. Als poröses Material ist hier insbesondere ein offenporiges poröses Material zu verstehen, durch dessen Poren Gas hindurchtreten kann. In diesem Fall können die plattenförmigen Elemente auch als eine integrale Komponente ausgebildet sein. Natürlich ist ein geschlossenporiges Material ebenso denkbar.

In einer vorteilhaften Weiterbildung kann die Dosiereinheit eine Strömungsrate von höchstens 100 cm³/s bei einem Druck von etwa 20 bar, insbesondere eine Strömungsrate von höchstens 20 cm³/s bei einem Druck von etwa 4 bar, aufweisen. Es hat sich gezeigt, dass bei derartigen Werten eine besonders gute Durchmischung des Flüssigkeitsgemischs mit Gas erreicht werden kann.

Natürlich ist es auch bei der erfindungsgemäßen Mischvorrichtung durchaus denkbar, dass die Mischvorrichtung ferner ein Rührwerk umfassen kann, welches die erste Flüssigkeit, die zweite Flüssigkeit und das hinzugefügte Gas miteinander vermischt. Wie bereits eingangs erwähnt, ist es gemäß der vorliegenden Erfindung jedoch möglich, auf ein Rührwerk zu verzichten, welches für eine Dispersion, insbesondere eine Zerkleinerung der Gasbläschen in dem Flüssigkeitsgemisch, verantwortlich ist.

Dabei kann das Rührwerk dazu eingerichtet sein, bei einer Umdrehungsgeschwindigkeit von höchstens 10.000 U/min, insbesondere von höchstens 6.000 U/min, betrieben zu werden.

In einer möglichen Ausführungsform der erfindungsgemäßen Mischvorrichtung kann das Gas Luft sein.

In einem Anwendungsfall, in welchem die Vorteile der vorliegenden Erfindung besonders zum Tragen kommen, kann die erste Flüssigkeit eine Viskosität von 100 mPa·s bis 500.000 mPa·s, insbesondere von 500 mPa·s bis 100.000 mPa·s, aufweisen.

Alternativ oder zusätzlich kann die zweite Flüssigkeit eine Viskosität von 20 mPa·s bis 200.000 mPas, insbesondere von 150 mPa·s bis 100.000 mPa·s, aufweisen.

Insbesondere kann die erste Flüssigkeit Polyol oder Silikon A und/oder die zweite Flüssigkeit Isozyanat oder Silikon B sein. Insbesondere kann es die vorliegende Erfindung ermöglichen die Tixotropie des Polyols nicht oder zumindest nur geringfügig zu verändern, sodass die negativen Effekte der Veränderung der Tixotropie, welche bei Mischvorrichtungen des Stands der Technik auftreten, bei der Handhabung von Polyol vermieden werden können

Allgemein wird die Tixotropie in die Bereiche "niedertixotrop", "mitteltixotrop" und "hochtixotrop" eingeteilt.

Vorteilhafterweise kann der vorbestimmte Druck des von der Gasquelle bereitgestellten Gases 1 bar bis 30 bar, insbesondere 15 bar bis 25 bar, vorteilhafterweise 24 bar, betragen.

Im Folgenden wird die vorliegende Erfindung in größerem Detail mit Bezug auf die begleitenden Zeichnungen beschrieben werden. Es stellt dar:

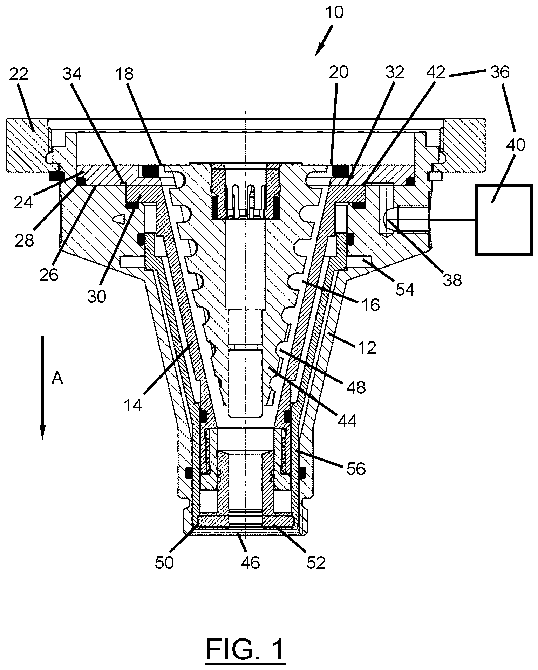

- Fig. 1: eine Querschnittsansicht einer erfindungsgemäßen Mischvorrichtung.

In Figur 1 ist eine erfindungsgemäße Mischvorrichtung allgemein mit dem Bezugszeichen 10 bezeichnet. Die Mischvorrichtung 10 umfasst ein Gehäuse 12, in welchem ein sich in einer Hauptströmungsrichtung A der durch die Mischvorrichtung 10 strömenden Flüssigkeiten erstreckendes Element 14 angeordnet ist. Das Element 14 bildet eine äußere Wand einer Mischkammer 16. An einem ersten Eintrittspunkt 18 in die Mischkammer 16 wird eine erste Flüssigkeit in die Mischkammer 16 eingegeben. An einem zweiten Eintrittspunkt 20 wird eine zweite Flüssigkeit in die Mischkammer 16 eingegeben.

Jeweilige Quellen bzw. Vorratsbehälter der ersten und der zweiten Flüssigkeit sind in einer übergeordneten Baugruppe (nicht dargestellt) angeordnet, welche in Bezug auf die Hauptströmungsrichtung A stromaufwärts angeordnet ist und mit welcher die Mischvorrichtung 10 über eine Befestigungsvorrichtung 22, wie beispielsweise eine Befestigungsmutter 22, verbunden werden kann.

Den Eingangspunkten 18 und 20 der beiden Flüssigkeiten benachbart ist ein erstes plattenförmiges Element 24 angeordnet, dessen untere Seite 26 über eine mit dem ersten plattenförmigen Element 24 und dem Gehäuse 12 zusammenwirkende Dichtung 28 gegenüber einer radial äußeren Seite hin abgedichtet ist. Das erste plattenförmige Element 24 ist hier im Wesentlichen als Ringscheibe ausgebildet.

Ein radial innen gelegener Abschnitt des ersten plattenförmigen Elements 24 liegt an einem zweiten plattenförmigen Element 30 an, welches durch einen ringförmigen Abschnitt des die Mischkammer 16 begrenzenden Elements 14 ausgebildet ist.

Zwischen dem ersten plattenförmigen Element 24 und dem zweiten plattenförmigen Element 30 ist ein Spalt 32 ausgebildet, durch welchen in einer definierten Weise Gas in die Mischkammer 16 eintreten kann. Zur Bereitstellung von Gas an der radial äußeren Seite des Spalts 32 ist eine den Spalt umgebende Ringnut 34 vorgesehen, welche in dem ersten plattenförmigen Element 24 gebildet ist. Die Ringnut 34 steht an der in Figur 1 rechts dargestellten Seite mit Bohrungen 38 in Fluidverbindung, welche eine Verbindung der Ringnut 34 mit einer das Gehäuse 12 umgebenden Außenseite herstellen, so dass eine Gasquelle 40 Gas unter einem vorbestimmten Druck an die Ringnut 34 liefern kann.

Auf diese Weise bildet der durch das erste plattenförmige Element 24 und das zweite plattenförmige Element 30 gebildete Spalt 32 eine Dosiereinheit 42, welche von der Gasquelle 40 bereitgestelltes Gas, wie beispielsweise Luft, um den gesamten äußeren Umfang eines Stroms von Flüssigkeitsgemisch, bestehend aus der ersten oder zweiten Flüssigkeit, welche an den Eingangspunkten 18 und 20 in die Mischkammer 16 eingegeben worden sind, Gas in das Gemisch der Flüssigkeiten einbringen kann. Die Dosiereinheit 42 und die Gasquelle 40 können zusammen als Gasinjektionsvorrichtung 36 betrachtet werden.

Durch entsprechendes Herstellen bzw. Bearbeiten einer Oberflächenrauheit der miteinander in Kontakt stehenden Flächen des ersten plattenförmigen Elements 24 und des zweiten plattenförmigen Elements 30 kann eine Durchlassmenge an Gas des Spalts 32 und/oder eine Größe der aus dem Spalt 32 in das Flüssigkeitsgemisch, welches sich in der Mischkammer 16 befindet, eintretenden Gasblasen sehr genau eingestellt werden.

In der Mischkammer 16 ist hier zentral ein Rührwerk 44 angeordnet, welches dazu eingerichtet ist, die erste Flüssigkeit, die zweite Flüssigkeit und das Gas miteinander zu vermischen. Wie in Figur 1 zu erkennen ist, ist die Dosiereinheit 42 bzw. der Spalt 32 den Eingangspunkten 18 und 20 der ersten und zweiten Flüssigkeit unmittelbar benachbart angeordnet. Auf diese Weise kann ein Förderweg von einem Abschnitt der Mischvorrichtung 10, an welchem die erste Flüssigkeit, die zweite Flüssigkeit und das Gas anfänglich miteinander vermischt werden, zu einem Ausgabeende 46 der Mischvorrichtung 10 maximiert werden, wodurch ein Ergebnis einer Durchmischung der oben erwähnten Komponenten verbessert werden kann.

Das Rührwerk 44 weist an seinem äußeren Umfang Rillen 48 auf, welche ein Ergreifen des Gas-Flüssigkeitsgemischs und damit ein Mischen der Komponenten verbessern können.

Die Mischvorrichtung 10 umfasst ferner eine Verschlusseinheit 50, welche ein Verschlusselement 52 umfasst, welches mit dem Rührwerk 44 derart zusammenwirken kann, dass eine Abgabe von Gas-Flüssigkeitsgemisch aus dem Ausgabeende 46 der Mischvorrichtung 10 verhindert werden kann. Zum Verschließen der Verschlusseinheit 50 kann in einen Raum 54, welcher in dem Gehäuse 12 der Mischvorrichtung 10 vorgesehen ist, ein Fluid mit einem vorbestimmten Druck eingegeben werden, welches eine Hubvorrichtung 56 der Verschlusseinheit 50 veranlasst, sich in einer in Figur 1 nach oben gerichteten Richtung zu bewegen, um das Verschlusselement 52 dem Rührwerk 44 anzunähern, das heißt das Ausgabeende 46 zu verschließen.

## Patentansprüche

1. Mischvorrichtung (10) für das Mischen einer ersten Flüssigkeit und einer zweiten Flüssigkeit mit einem Gas, umfassend
eine Mischkammer (16), in welcher die erste Flüssigkeit mit der zweiten Flüssigkeit in Kontakt tritt, und
eine Gasinjektionsvorrichtung (36), welche dazu eingerichtet ist, Gas in die Mischkammer (16) zu injizieren,
wobei die Gasinjektionsvorrichtung (36) umfasst:
eine Gasquelle (40), welche Gas mit einem vorbestimmten Druck bereitstellt, und
eine Dosiereinheit (42), welche dazu eingerichtet ist, das von der Gasquelle (40) bereitgestellte Gas auf eine vorbestimmte Strömungsrate zu begrenzen, und welche an ihrer Gasaustrittsseite mit der Mischkammer (16) in Kontakt steht,
**dadurch gekennzeichnet, dass** die Gasaustrittsseite der Dosiereinheit (42) einen länglichen Spalt (32) umfasst, über welchen das Gas aus der Dosiereinheit (42) in die Mischkammer (16) austritt, dass die Dosiereinheit (42) aus zwei miteinander gekoppelten plattenförmigen Elementen (24, 30) gebildet ist, und
dass die plattenförmigen Elemente (24, 30) im Wesentlichen vollflächig aneinander anliegen,
wobei sich der längliche Spalt (32) durch die Rauheit zweier aufeinanderliegender Flächen ergibt.

2. Mischvorrichtung (10) nach Anspruch 1,
**dadurch gekennzeichnet, dass** die aneinander anliegenden Flächen der plattenförmigen Elemente (24, 30) eine mittlere Oberflächenrauheit von höchstens Ra 0,1, insbesondere von höchstens Ra 0,05, vorteilhafterweise von Ra 0,03, aufweisen.

3. Mischvorrichtung (10) nach einem der vorhergehenden Ansprüche, **dadurch gekennzeichnet, dass** die plattenförmigen Elemente (24, 30) als Ringscheiben ausgebildet sind, wobei die Gasaustrittsseite der Dosiereinheit (42) an der Ringinnenseite gebildet ist.

4. Mischvorrichtung (10) nach einem der vorhergehenden Ansprüche, **dadurch gekennzeichnet, dass** die plattenförmigen Elemente (24, 30) aus Metall, insbesondere aus Stahl oder Aluminium, und/oder aus Keramik und/oder aus Polytetrafluorethylen hergestellt sind.

5. Mischvorrichtung (10) nach einem der vorhergehenden Ansprüche, **dadurch gekennzeichnet, dass** die plattenförmigen Elemente (24, 30) aus einem porösen Material hergestellt sind.

6. Mischvorrichtung (10) nach einem der vorhergehenden Ansprüche, **dadurch gekennzeichnet, dass** die Dosiereinheit (42) eine Strömungsrate von höchstens 100 cm³/s bei einem Druck von etwa 20 bar, insbesondere eine Strömungsrate von höchstens 20 cm³/s bei einem Druck von etwa 4 bar, aufweist.

7. Mischvorrichtung (10) nach einem der vorhergehenden Ansprüche, **dadurch gekennzeichnet, dass** die Mischvorrichtung (10) ferner ein Rührwerk (44) umfasst, welches die erste Flüssigkeit, die zweite Flüssigkeit und das hinzugefügte Gas miteinander vermischt.

8. Mischvorrichtung (10) nach dem vorhergehenden Anspruch,
**dadurch gekennzeichnet, dass** das Rührwerk (44) dazu eingerichtet ist, bei einer Umdrehungsgeschwindigkeit von höchstens 10.000 U/min, insbesondere von höchstens 6.000 U/min, betrieben zu werden.

9. Mischvorrichtung (10) nach einem der vorhergehenden Ansprüche, **dadurch gekennzeichnet, dass** das Gas Luft ist.

10. Mischvorrichtung (10) nach einem der vorhergehenden Ansprüche, **dadurch gekennzeichnet, dass** die erste Flüssigkeit eine Viskosität von 100 mPa·s bis 500.000 mPa·s, insbesondere von 500 mPa·s bis 100.000 mPas, aufweist.

11. Mischvorrichtung (10) nach einem der vorhergehenden Ansprüche, **dadurch gekennzeichnet, dass** die zweite Flüssigkeit eine Viskosität von 20 mPa·s bis 200.000 mPa·s, insbesondere von 150 mPa·s bis 100.000 mPa s, aufweist.

12. Mischvorrichtung (10) nach einem der vorhergehenden Ansprüche, **dadurch gekennzeichnet, dass** die erste Flüssigkeit Polyol oder Silikon A und/oder die zweite Flüssigkeit Isozyanat oder Silikon B ist.

13. Mischvorrichtung (10) nach einem der vorhergehenden Ansprüche, **dadurch gekennzeichnet, dass** der vorbestimmte Druck des von der Gasquelle bereitgestellten Gases 1 bar bis 30 bar, insbesondere 15 bar bis 25 bar, vorteilhafterweise 24 bar, beträgt.

## Claims

1. Mixing device (10) for mixing a first liquid and a second liquid with a gas, comprising
a mixing chamber (16) in which the first liquid comes into contact with the second liquid, and
a gas injection device (36) which is designed to inject gas into the mixing chamber (16),
the gas injection device (36) comprising:
a gas source (40), which provides gas at a predetermined pressure, and
a metering unit (42), which is set up to limit the gas provided by the gas source (40) to a predetermined flow rate, and which is in contact with the mixing chamber (16) on its gas outlet side,
**characterized in that** the gas outlet side of the metering unit (42) comprising an elongated gap (32) through which the gas from the metering unit (42) exits into the mixing chamber (16),
that the metering unit (42) is formed from two plate-shaped elements (24, 30) coupled to one another, and
that the plate-shaped elements (24, 30) rest against one another essentially over the entire surface,
wherein the elongated gap (32) results from the roughness of two surfaces lying on top of each other.

2. Mixing device (10) according to claim 1, **characterized in that** the adjacent surfaces of the plate-shaped elements (24, 30) have an average surface roughness of at most Ra 0.1, in particular at most Ra 0.05, advantageously of Ra 0.03.

3. Mixing device (10) according to one of the preceding claims,
**characterized in that** the plate-shaped elements (24, 30) are designed as annular disks, the gas outlet side of the metering unit (42) being formed on the inside of the ring.

4. Mixing device (10) according to one of the preceding claims,
**characterized in that** the plate-shaped elements (24, 30) are made of metal, in particular steel or aluminum, and/or ceramic and/or polytetrafluoroethylene.

5. Mixing device (10) according to one of the preceding claims,
**characterized in that** the plate-shaped elements (24, 30) are made of a porous material.

6. Mixing device (10) according to one of the preceding claims,
**characterized in that** the metering unit (42) has a flow rate of at most 100 cm³/s at a pressure of approximately 20 bar, in particular a flow rate of at most 20 c cm³/s at a pressure of about 4 bar.

7. Mixing device (10) according to one of the preceding claims,
**characterized in that** the mixing device (10) further comprises an agitator (44) which mixes the first liquid, the second liquid and the added gas with one another.

8. Mixing device (10) according to the preceding claim,
**characterized in that** the agitator (44) is set up to be operated at a rotational speed of at most 10,000 rpm, in particular at most 6,000 rpm.

9. Mixing device (10) according to one of the preceding claims,
**characterized in that** the gas is air.

10. Mixing device (10) according to one of the preceding claims,
**characterized in that** the first liquid has a viscosity of 100 mPa·s to 500,000 mPa s, in particular from 500 mPa·s to 100,000 mPa·s.

11. Mixing device (10) according to one of the preceding claims,
**characterized in that** the second liquid has a viscosity of 20 mPa·s to 200,000 mPa·s, in particular from 150 mPa·s to 100,000 mPa·s.

12. Mixing device (10) according to one of the preceding claims,
**characterized in that** the first liquid is polyol or silicone A and/or the second liquid is isocyanate or silicone B.

13. Mixing device (10) according to one of the preceding claims,
**characterized in that** the predetermined pressure of the gas provided by the gas source is 1 bar to 30 bar, in particular 15 bar to 25 bar, advantageously 24 bar.

## Revendications

1. Dispositif de mélange (10) destiné à mélanger un premier liquide et un deuxième liquide avec un gaz, comprenant
une chambre de mélange (16) dans laquelle le premier liquide entre en contact avec le deuxième liquide, et
un dispositif d'injection de gaz (36) conçu pour injecter du gaz dans la chambre de mélange (16),
le dispositif d'injection de gaz (36) comprenant :
une source de gaz (40) qui fournit du gaz à une pression prédéterminée, et
une unité de dosage (42) qui est conçue pour limiter le gaz, fourni par la source de gaz (40), à un débit prédéterminé, et qui est en contact avec la chambre de mélange (16) au niveau de son côté de sortie de gaz,
**caractérisé en ce que**
le côté de sortie de gaz de l'unité de dosage (42) présente une fente allongée (32) par laquelle le gaz sort de l'unité de dosage (42) pour entrer dans la chambre de mélange (16),
**en ce que** l'unité de dosage (42) est formée de deux éléments en forme de plaque (24, 30) couplés entre eux, et
**en ce que** les éléments en forme de plaque (24, 30) sont en appui l'un contre l'autre sensiblement sur toute leur surface,
la fente allongée (32) résultant de la rugosité de deux surfaces superposées.

2. Dispositif de mélange (10) selon la revendication 1,
**caractérisé en ce que** les surfaces des éléments en forme de plaque (24, 30) en appui l'une contre l'autre présentent une rugosité superficielle moyenne de Ra 0,1 au maximum, en particulier de Ra 0,05 au maximum, avantageusement de Ra 0,03.

3. Dispositif de mélange (10) selon l'une des revendications précédentes, **caractérisé en ce que** les éléments en forme de plaque (24, 30) sont réalisés sous forme de rondelles, le côté de sortie de gaz de l'unité de dosage (42) étant formé sur le côté intérieur des rondelles.

4. Dispositif de mélange (10) selon l'une des revendications précédentes, **caractérisé en ce que** les éléments en forme de plaque (24, 30) sont fabriqués en métal, en particulier en acier ou en aluminium, et/ou en céramique et/ou en polytétrafluoroéthylène.

5. Dispositif de mélange (10) selon l'une des revendications précédentes, **caractérisé en ce que** les éléments en forme de plaque (24, 30) sont fabriqués en un matériau poreux.

6. Dispositif de mélange (10) selon l'une des revendications précédentes, **caractérisé en ce que** l'unité de dosage (42) présente un débit de 100 cm³/s au maximum, à une pression d'environ 20 bars, en particulier un débit de 20 cm³/s au maximum, à une pression d'environ 4 bars.

7. Dispositif de mélange (10) selon l'une des revendications précédentes, **caractérisé en ce que** le dispositif de mélange (10) comprend en outre un agitateur (44) qui mélange le premier liquide, le deuxième liquide et le gaz ajouté.

8. Dispositif de mélange (10) selon la revendication précédente,
**caractérisé en ce que** l'agitateur (44) est conçu pour fonctionner à une vitesse de rotation de 10 000 tr/min au maximum, en particulier de 6 000 tr/min au maximum.

9. Dispositif de mélange (10) selon l'une des revendications précédentes, **caractérisé en ce que** le gaz est de l'air.

10. Dispositif de mélange (10) selon l'une des revendications précédentes, **caractérisé en ce que** le premier liquide présente une viscosité de 100 mPa·s à 500 000 mPa s, en particulier de 500 mPa·s à 100 000 mPa s.

11. Dispositif de mélange (10) selon l'une des revendications précédentes, **caractérisé en ce que** le deuxième liquide présente une viscosité de 20 mPa·s à 200 000 mPa s, en particulier de 150 mPa·s à 100 000 mPa s.

12. Dispositif de mélange (10) selon l'une des revendications précédentes, **caractérisé en ce que** le premier liquide est le polyol ou la silicone A et/ou le deuxième liquide est l'isocyanate ou la silicone B.

13. Dispositif de mélange (10) selon l'une des revendications précédentes, **caractérisé en ce que** la pression prédéterminée du gaz fourni par la source de gaz est comprise entre 1 bar et 30 bars, en particulier entre 15 bars et 25 bars, avantageusement égale à 24 bars.
